Europäisches Patentamt

European Patent Office

Office européen des brevets

(11) Veröffentlichungsnummer: **0 179 389**
**B1**

(12) **EUROPÄISCHE PATENTSCHRIFT**

(45) Veröffentlichungstag der Patentschrift:
28.12.88

(51) Int. Cl.⁴: **B 60 P 1/60**

(21) Anmeldenummer: 85113118.5

(22) Anmeldetag: 16.10.85

(54) Fahrzeug, insbesondere Kraftfahrzeug, zur Fäkalienentsorgung von Flugzeugen.

(30) Priorität: 20.10.84 DE 8430928 U

(43) Veröffentlichungstag der Anmeldung:
30.04.86 Patentblatt 86/18

(45) Bekanntmachung des Hinweises auf die Patenterteilung:
28.12.88 Patentblatt 88/52

(84) Benannte Vertragsstaaten:
AT BE CH FR GB IT LI LU NL SE

(56) Entgegenhaltungen:
DE-A- 2 917 198
DE-A- 2 933 669

(73) Patentinhaber: Schüchen GmbH & Co. KG
Luftfahrtbodengeräte, Betzdorfer Strasse 20,
D-5241 Nauroth (DE)

(72) Erfinder: Scharfenstein, Fritz, Buchenweg 8,
D-5239 Nister (DE)

(74) Vertreter: Grommes, Karl F., Dr., Mehlstrasse 14-16,
D-5400 Koblenz (DE)

ACTORUM AG

## Beschreibung

### Technisches Gebiet

Die Neuerung betrifft ein Fahrzeug, insbesondere Kraftfahrzeug, zur Fäkalienentsorgung von Flugzeugen mit einem Tank zur Aufnahme von Fäkalien sowie einem Zuleitungsschlauch zum Anschluss an das zu entsorgende Flugzeug.

Derartige Fahrzeuge zählen zu den sogenannten Luftfahrtbodengeräten. Sie stehen auf Flugplätzen der zivilen wie auch militärischen Luftfahrt im Einsatz. Dabei vollzieht sich die Fäkalienentsorgung folgendermassen.

### Stand der Technik

Zunächst wird das Fahrzeug in die Nähe des zu entsorgenden Flugzeuges gebracht und an letzteres der Zuleitungsschlauch angeschlossen. Sodann wird am oder im Flugzeug das Bodenventil geöffnet, worauf die Fäkalien nach dem Schwerkraftprinzip in den Tank des Fahrzeuges abfliessen.

Infolge der unterschiedlichen Bauhöhen der Flugzeuge sind zwangsläufig auch unterschiedliche Bauhöhen bzw. Übergabehöhen bei den Fahrzeugen verwirklicht. Dies bedeutet für die Praxis, dass der Geräteaufwand für einen Flughafen umso grösser ist, je mehr unterschiedliche Flugzeugtypen zur Abfertigung gelangen.

Darüberhinaus ist aber noch ein weiterer Nachteil zu verzeichnen. So besteht insbesondere bei niedrigen Flugzeugen in der Regel die Notwendigkeit, den Zuleitungsschlauch nachzuheben, bevor er vom Flugzeug gelöst werden kann. Erst durch ein solches Nachheben können die in durchhängenden Schlauchabschnitten verbliebenen Fäkalien noch in den Tank abfliessen. Dazu wird letztlich der Schlauch mit den darin befindlichen Fäkalien bis über die Höhe des Einlaufstutzens am Tank angehoben. Wie ersichtlich, bringt eine ordnungsgemässe Entsorgung auch einen beträchtlichen Bedienungsaufwand mit sich.

Schliesslich kann die bisherige Entsorgung aber auch noch umständlicher und in hygienischer Hinsicht bedenklicher sein, ja regelrecht eine Zumutung für das Bedienungspersonal darstellen. So ist nämlich bei sehr niedrigen Flugzeugen, wie beispielsweise dem Typ HERKULES, selbst mit sehr kleinen Fahrzeugen eine normale Abfertigung nicht mehr möglich. Dabei muss dann eine Wanne unter den Fäkalienablass des Flugzeuges geschoben werden, um darin die Fäkalien zunächst offen aufzufangen.

Zusammenfassend bleibt also festzustellen, dass die bisher bekannten Fahrzeuge stärker den jeweils zu entsorgenden Flugzeugen in ihrer Bau- bzw. Übergabehöhe angepasst sein müssen, in der Regel noch einen beachtlichen manuellen Bedienungsaufwand erfordern und bei sehr niedrigen Flugzeugen unter Umständen überhaupt keine reguläre Abfertigung mehr erlauben.

### Darstellung der Erfindung

Hier setzt nun die Neuerung an. Sie möchte ein Fahrzeug der eingangs genannten Art so weiterbilden, dass dieses zur Fäkalienentsorgung von Flugzeugen recht unterschiedlicher Höhe bis hinab zu sehr niedrigen Höhen herangezogen werden kann. Gleichzeitig soll der erforderliche manuelle Bedienungsaufwand verringert werden.

Gelöst werden kann diese komplexe Aufgabe nach dem Vorschlag der Neuerung dadurch, dass zwischen dem Tank und dem Zuleitungsschlauch ein Zwischenbehälter für Fäkalien vorgesehen ist, dass dem Zwischenbehälter eine Vakuumpumpe und ein Druckluftbehälter zugeordnet sind und dass die Verbindungsleitungen von dem Zwischenbehälter zu dem Tank, dem Zuleitungsschlauch, der Vakuumpumpe und dem Druckbehälter jeweils ein Absperrorgan aufweisen.

Der vorgeschlagene Zwischenbehälter soll zunächst evakuiert werden und dann die Fäkalien aus dem Flugzeug absaugen. Vom Zwischenbehälter können die Fäkalien anschliessend in den Tank übertreten, wobei dieser Vorgang von dem vorgeschlagenen Druckluftbehälter unterstützt wird. Während der Zwischenbehälter als Druckgefäss ausgeführt sein muss, kann der Tank wie bisher ein druckloser Sammelbehälter sein. Das neuerungsgemässe Fahrzeug arbeitet nicht mehr nach dem Schwerkraftprinzip und ist damit unabhängig von Bau- oder Übergabehöhen. Ein einziges neuerungsgemässes Fahrzeug kann jetzt die Aufgabe verschiedener Fahrzeuge früherer Bauart übernehmen. Das neue Fahrzeug benötigt ausserdem nur noch wenig Bedienungsaufwand und ist selbst noch für sehr niedrige Flugzeuge tauglich. Nicht zuletzt auch aus hygienischer Sicht erweist sich ein solches Fahrzeug als eine beachtliche Verbesserung. So sind Bedienungs- und Bodenpersonal jetzt kaum mehr irgendwelchen Geruchsbelästigungen ausgesetzt.

In der Regel wird das Fahrzeug eine Bremsanlage mit Druckluftkessel und damit einen Kompressor besitzen. Diese Anlage lässt sich über entsprechende Rückschlag- und Sicherheitsventile so erweitern, dass derselbe Kompressor im Interesse eines einfachen apparativen Aufbaus mit seiner überschüssigen Leistung auch den Druckluftbehälter füllen kann.

Zweckmässigerweise sind die Absperrorgane in den einzelnen Verbindungsleitungen derart miteinander verbunden, dass bei geöffnetem Absperrorgan in der Verbindungsleitung zur Vakuumpumpe alle anderen Absperrorgane geschlossen sind, dass bei geöffnetem Absperrorgan in der Verbindungsleitung zum Zuleitungsschlauch alle anderen Absperrorgane geschlossen sind und dass bei geöffnetem Absperrorgan in der Verbindungsleitung zum Tank auch das Absperrorgan in der Verbindungsleitung zum Druckluftbehälter geöffnet ist und die beiden übrigen Absperrorgane geschlossen sind.

In weiterer Ausgestaltung des Neuerungsgedankens sind die Absperrorgane derart gegeneinander verriegelt, dass sich zunächst nur das Absperrorgan in der Verbindungsleitung zur Vakuumpumpe öffnen und schliessen lässt, danach das Absperrorgan in der Verbindungsleitung zum Zuleitungsschlauch und anschliessend die Absperrorgane in den Verbindungsleitungen zum Tank sowie zum Druckluftbehälter.

Vorteilhaft besitzt der Zwischenbehälter ein abschliessend betätigbares Entlüftungsventil mit einem Halterelais.

## Kurze Beschreibung der Zeichnung

Weitere Einzelheiten der Neuerung werden nachfolgend an Hand der Zeichnung für ein bevorzugtes Ausführungsbeispiel beschrieben. Darin zeigen:

Figur 1 ein neuerungsgemässes Fahrzeug in schematischer Seitenansicht und

Figur 2 den Gegenstand von Figur 1 mit den neuerungswesentlichen Aggregaten in Draufsicht.

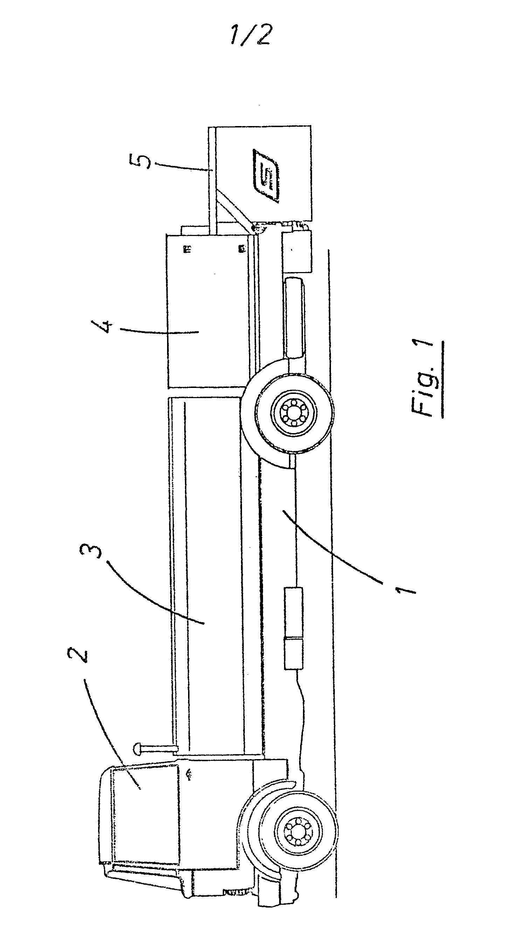

Nach Figur 1 besteht ein neuerungsgemässes Fahrzeug aus einem Chassis 1 mit Fahrerhaus 2 und einem Tank 3. Im Anschluss an den Tank 3 folgen nach hinten ein eigener Aggregate-Raum 4 sowie eine Hubbühne 5 für Bedienungspersonal.

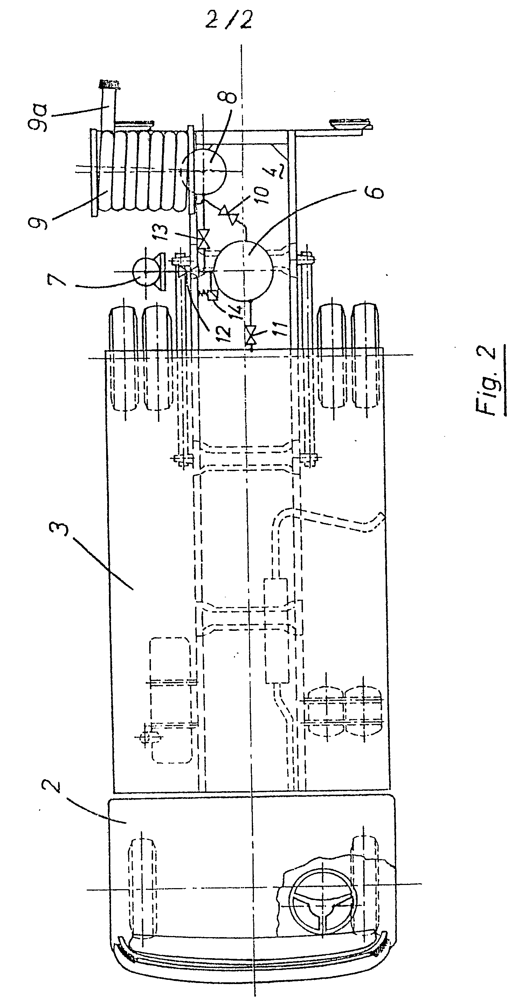

Wie Figur 2 näher erkennen lässt, sind im Aggregate-Raum 4 alle neuerungswesentlichen Bauteile untergebracht. Dazu zählen ein Zwischenbehälter 6, eine Vakuumpumpe 7 sowie ein Druckbehälter 8. Letzterer ist an einen fahrzeugeigenen Kompressor angeschlossen, was hier jedoch nicht näher dargestellt ist. Ebenfalls im Aggregate-Raum 4 mit untergebracht ist ein Zuleitungsschlauch 9, welcher auf einer Schlauchtrommel aufgewickelt ist. Er ist einerseits mit dem Zwischenbehälter 6 verbunden und besitzt andererseits ein freies Ende 9a zum Anschluss an ein Flugzeug.

Von den erwähnten Aggregaten nimmt der Zwischenbehälter 6 sozusagen eine zentrale Stellung ein mit Verbindungsleitungen zu dem Zuleitungsschlauch 9, dem Tank 3, der Vakuumpumpe 7 sowie dem Druckbehälter 8. In allen Verbindungsleitungen ist jeweils ein Absperrorgan angeordnet, wie mit den Bezugsziffern 10, 11, 12 und 13 bezeichnet. Ausserdem weist der Zwischenbehälter 6 ein Entlüftungsventil mit einem Halterelais 14 auf.

Die angegebenen Aggregate funktionieren folgendermassen. Über den im Fahrzeug befindlichen Kompressor wird zunächst der Druckluftkessel der Bremsanlage gefüllt. Sobald der Bremsanlage der erforderliche Druck zur Verfügung steht, fliesst die weitere Druckluft in den Druckluftbehälter 8. Diese Anlagenerweiterung muss einschlägigen gesetzlichen Bestimmungen, insbesondere der Strassenverkehrszulassungsordnung, entsprechen. Dazu sind unter anderem Rückschlag- und Sicherheitsventile vorgesehen.

Bevor der Bedienungsmann den Zuleitungsschlauch 9 an das Flugzeug anschliesst, setzt er die Vakuumpumpe 7 über einen Drucktaster mit der Aufschrift VAKUUM in Betrieb. Dabei ist das Absperrorgan 12 geöffnet, während alle anderen Absperrorgane geschlossen bleiben. Die Vakuumpumpe 7 schaltet ab, sobald das erforderliche Vakuum im Zwischenbehälter 6 erreicht ist.

Nun kann der Bedienungsmann den Zuleitungsschlauch 9 mit dem freien Ende 9a am Flugzeug anschliessen und das Bodenventil am Flugzeug öffnen. Danach öffnet er das Absperrorgan 10, das ist ein pneumatisch gesteuertes Einlassventil, in der Verbindungsleitung vom Zwischenbehälter 6 zum Zuleitungsschlauch 9, was durch Betätigen eines Drucktasters mit der Aufschrift ABSAUGEN ausgelöst wird. Infolge des im Zwischenbehälter 6 bestehenden Vakuums werden die Fäkalien aus dem Flugzeug abgesaugt. Nachdem das Vakuum abgebaut und die Fäkalien übernommen sind, schliesst das Einlassventil des Zwischenbehälters 6.

Anschliessend lassen sich über einen Drucktaster mit der Aufschrift ENTLEEREN gleichzeitig die Absperrorgne 11 und 13 öffnen, das sind ein Ablassventil zum Tank 3 und ein Luftabgabeventil am Druckluftbehälter 8. Die aus dem Druckluftbehälter 8 ausströmende Luft drückt in dem Zwischenbehälter 6 von oben auf die Fäkalien und schiebt diese aus dem Zwischenbehälter 6 in den Tank 3.

Der Tank 3 ist, wie bereits erwähnt, drucklos. Die hier zusammen mit den Fäkalien eindringende Luft kann in dem Tank 3 durch eine Zwangsent- und -belüftung entweichen. Die evtl. in dem Zwischenbehälter 6 verbleibende Restluft entweicht über ein mit Halterelais ausgerüstetes Entlüftungsventil 14. Dadurch wird die Laufzeit der Vakuumpumpe 7 verkürzt.

Eine Fehlbedienung ist nicht möglich, da die Drucktaster und damit die jeweiligen Aggregate, einschliesslich der Absperrorgane, wie vorstehend beschrieben, gegeneinander verriegelt sind und nur in der vorgegebenen Reihenfolge in Funktion gesetzt werden können. Darüberhinaus ist jedoch aus Sicherheitsgründen auch ein jederzeitiges Abschalten, ungeachtet der gerade eingeschalteten Funktion, möglich, wozu ein zusätzlicher NOTAUSTASTER vorgesehen ist.

## Patentansprüche

1. Fahrzeug, insbesondere Kraftfahrzeug, zur Fäkalienentsorgung von Flugzeugen mit einem Tank (3) zur Aufnahme von Fäkalien sowie einem Zuleitungsschlauch (9) zum Anschluss an das zu entsorgende Flugzeug, dadurch gekennzeichnet, dass zwischen dem Tank (3) und dem Zuleitungsschlauch (9) ein Zwischenbehälter (6) für Fäkalien vorgesehen ist, dass dem Zwischenbehälter (6) eine Vakuumpumpe (7) und ein Druckluftbehälter (8) zugeordnet sind und dass die Verbindungsleitungen von dem Zwischenbehälter (6) zu dem Tank (3), dem Zuleitungsschlauch (9), der Vakuumpumpe (7) und dem Druckluftbehälter (8) jeweils ein Absperrorgan (10, 11, 12, 13) aufweisen.

2. Fahrzeug nach Anspruch 1, dadurch gekennzeichnet, dass der Druckluftbehälter (8) gegebenenfalls an einen fahrzeugeigenen Kompressor angeschlossen ist.

3. Fahrzeug nach Anspruch 1 oder 2, dadurch gekennzeichnet, dass die Absperrorgane (10, 11, 12, 13) in den einzelnen Verbindungsleitungen derart miteinander verbunden sind, dass bei geöffnetem Absperrorgan (12) in der Verbindungsleitung zur Vakuumpumpe (7) alle anderen Absperrorgane (10, 11, 13) geschlossen sind, dass bei geöffnetem Absperrorgan (10) in der Verbindungsleitung zum Zuleitungsschlauch (9) alle anderen Absperrorgane (11, 12, 13) geschlossen sind und dass bei geöffnetem Absperrorgan (11) in der Verbindungsleitung zum Tank (3) auch das Absperrorgan (13) in der Verbindungsleitung zum Druckluftbehälter (8) geöffnet ist und die beiden übrigen Absperrorgane (10, 12) geschlossen sind.

4. Fahrzeug nach Anspruch 3, dadurch gekennzeichnet, dass die Absperrorgane (10, 11, 12, 13) derart gegeneinander verriegelt sind, dass sich zunächst nur das Absperrorgan (12) in der Verbindungsleitung zur Vakuumpumpe (7) öffnen und schliessen lässt, danach das Absperrorgan (10) in der Verbindungsleitung zum Zuleitungsschlauch (9) und anschliessend die Absperrorgane (11, 13) in den Verbindungsleitungen zum Tank (3) sowie zum Druckluftbehälter (8).

5. Fahrzeug nach einem der Ansprüche 1 bis 4, dadurch gekennzeichnet, dass der Zwischenbehälter (6) ein abschliessend betätigbares Entlüftungsventil mit einem Halterelais (14) besitzt.

**Revendications**

1. Véhicule, et en particulier véhicule à moteur, pour évacuer les matières fécales des avions, comprenant un réservoir (3) destiné à recevoir les matières fécales, ainsi qu'un tuyau souple d'amenée (9) destiné à être raccordé à l'avion à évacuer, caractérisé par le fait qu'entre le réservoir (3) et le tuyau souple d'amenée (9) est prévu un réservoir intermédiaire (6) pour les matières fécales, qu'une pompe à vide (7) et un réservoir d'air comprimé (8) sont associés au réservoir intermédiaire (6), et que chaque conduit de liaison allant du réservoir intermédiaire (6) au réservoir principal (3), au tuyau souple d'amenée (9), à la pompe à vide (7) et au réservoir sous pression (8) comporte un organe d'arrêt (10, 11, 12, 13).

2. Véhicule selon la revendication 1, caractérisé par le fait que le réservoir d'air comprimé (8) est relié, le cas échéant, à un compresseur propre au véhicule.

3. Véhicule selon la revendication 1 ou 2, caractérisé par le fait que les organes d'arrêt (10, 11, 12, 13) des divers conduits de liaison sont reliés entre eux de telle manière que, lorsque l'organe d'arrêt (12) sur le conduit de liaison allant à la pompe à vide (7) est ouvert, tous les autres organes d'arrêt (10, 11, 13) sont fermés, que lorsque l'organe (10) d'arrêt sur le conduit de liaison allant vers le tuyau souple d'amenée (9) est ouvert, tous les autres organes d'arrêt (11, 12, 13) sont fermés, et que, lorsque l'organe d'arrêt (11) sur le conduit de liaison allant vers le réservoir principal (3) est ouvert, l'organe d'arrêt (13) sur le conduit de liaison allant vers le réservoir d'air comprimé (8) est également ouvert et les deux autres organes d'arrêt (10, 12) sont fermés.

4. Véhicule selon la revendication 3, caractérisé par le fait que les organes d'arrêt (10, 11, 12, 13) sont verrouillés les uns par rapport aux autres de telle façon que, tout d'abord, c'est seulement l'organe d'arrêt (12) sur le conduit de liaison allant vers la pompe à vide (7) qui peut être ouvert et fermé, qu'ensuite c'est l'organe d'arrêt (10) sur le conduit de liaison allant vers le tuyau souple (9) d'amenée qui peut l'être, et enfin les organes d'arrêt (11, 13) sur les conduits de liaison allant vers le réservoir principal (3) ainsi que vers le réservoir d'air comprimé (8) qui peuvent l'être.

5. Véhicule selon l'une des revendications 1 à 4, caractérisé par le fait que le réservoir intermédiaire (6) comporte une soupape de dégagement d'air à relais d'arrêt (14) qui peut être actionnée dans le sens de la fermeture.

**Claims**

1. Vehicle, particularly motor vehicle, for sewage removal from aircraft having a tank (3) for the reception of sewage as well as a feed hose (9) for connection to the aircraft that is to be cleared, characterised in that an intermediate container (6) for sewage is provided between the tank (3) and the feed hose (9), in that a vacuum pump (7) and a compressed-air container (8) are associated with the intermediate container (6) and in that the connecting pipes from the intermediate container (6) to the tank (3), the feed hose (9), the vacuum pump (7) and the compressed-air container (8) each have a shut-off member (10, 11, 12, 13).

2. Vehicle according to claim 1, characterised in that the compressed-air container (8) is as required connected to a compressor belonging to the vehicle.

3. Vehicle according to claim 1 or 2, characterised in that the shut-off members (10, 11, 12, 13) in the individual connecting pipes are connected to one another in such a way that with the shut-off member (12) in the connecting pipe to the vacuum pump (7) open all the other shut-off members (10, 11, 13) are closed, in that with the shut-off member (10) in the connecting pipe to the feed hose (9) open all the other shut-off members (11, 12, 13) are closed and in that with the shut-off member (11) in the connecting pipe to the tank (3) open also the shut-off member (13) in the connecting pipe to the compressed-air container (8) is open and the two remaining shut-off members (10, 12) are closed.

4. Vehicle according to claim 3, characterised in that the shut-off members (10, 11, 12, 13) are interlocked in such a way that initially only the shut-off member (12) in the connecting pipe to the vacuum pump (7) can be opened and closed, after that the shut-off member (10) in the connecting pipe to the feed hose (9) and then the shut-off members (11, 13) in the connecting pipes to the tank (3) and to the compressed-air container (8).

5. Vehicle according to one of claims 1 to 4, characterised in that the intermediate container (6) possesses a finally actuable air-vent valve having a holding relay (14).

1/2

Fig. 1

2 / 2

Fig. 2

7